# EUROPEAN PATENT APPLICATION

(11) **EP 1 316 910 A2**
(43) Date of publication of application: **04.06.2003**
(21) Application number: 02017742.4
(22) Date of filing: 08.08.2002
(51) Int. Cl.: G06F 19/00

(54) **Evaluating program, recording medium thereof, timing evaluating apparatus, and timing evaluating system**

(30) Priority: 09.08.2001 JP 2001241687; 25.01.2002 JP 2002017588; 25.01.2002 JP 2002017589; 30.04.2002 JP 2002129175
(71) Applicant: Konami Corporation, Minato-ku, Tokyo (JP)
(72) Inventor: Tsurugai, Yasuo, Konami Sports Life Corp., Shinagawa-ku, Tokyo (JP); Matsumoto, Masahiro, Konami Sports Life Corp., Shinagawa-ku, Tokyo (JP); Ito, Kenji, Konami Sports Life Corp., Shinagawa-ku, Tokyo (JP); Ide, Kenichiro, Konami Sports Life Corp., Shinagawa-ku, Tokyo (JP)
(74) Representative: Zimmermann, Gerd Heinrich

(57) **Abstract**

A computer program for evaluating input 20 timing of a user including an output module 160 for continuously outputting sound or image to the user; a timing detecting module 240 for detecting input timing of the user according to the sound or image; an evaluating time period setting module 235 for setting up a changeable time period according to output timing of the sound or image; and an evaluating module 245 for comparing the time period with the input timing and providing evaluating information according to a result of the comparison, is provided.

## Description

The present invention relates to an evaluating program, a recording medium thereof, a timing evaluating apparatus, and a timing evaluating system. More particularly, the present invention relates to an evaluating program, a recording medium thereof, a timing evaluating apparatus, and a timing evaluating system for evaluating input timing of a user.

There are, for example, game machines, as conventional systems for evaluating input timing of a user. But, according to the conventional system, the evaluated results were varied widely according to each kinds of conditions. Moreover, the result of the evaluation of this system was too simple.

The present invention intends to overcome the above problems. The object is solved by the computer program according to independent claims 1, 12, 21, 22 and 23, the recording medium according to independent claims 15 and 16 and the timing evaluation apparatus according to independent claims 17, 18, 19 and 20. Further advantages, features, aspects and details of the invention are evident from the dependent claims, the description and the accompanying drawings.

Therefore, it is an object of the present invention to provide an evaluating program, a recording medium thereof, a timing evaluating apparatus, and a timing evaluating system, which is capable of overcoming the above drawbacks accompanying the conventional art by providing variegated evaluation results. The above object can be achieved by combinations described in the independent claims. The dependent claims define further advantageous and exemplary combinations of the present invention.

According to the first aspect of the present invention, a computer program for evaluating input timing of a user includes an output module for continuously outputting sound or image to the user, a timing detecting module for detecting input timing of the user according to the sound or image, an evaluating time period setting module for setting up a changeable time period according to output timing of the sound or image, and an evaluating module for comparing the time period with the input timing and providing evaluating information according to a result of the comparison.

The computer program may include a mode setting module for selecting one mode out of a plurality of modes, wherein the evaluating time setting module changes the time period according to the mode.

The computer program may include a reference time setting module for setting up a reference time which indicates timing on which the user has to provide the input according to the output timing of the sound or image, wherein the evaluating time setting module sets up the time period to include a time earlier than the reference time.

According to the computer program of the present invention, preferably the timing detecting module detects the input timing transmitted from a plurality of external devices and identifying information which identifies each of the plurality of external devices, the evaluating time setting module can set the time period on each of the a plurality of external devices, and the evaluating module provides the evaluating information based on the input timing received from each of the plurality of external devices, the identifying information and the time period set on each of the plurality of external devices.

According to the computer program of the present invention, preferably the mode setting module, selects a predetermined mode out of a plurality of modes including a normal mode and a veteran mode, the veteran mode being designed for a veteran-level user, and, in case the veteran mode is selected, the evaluating time setting module sets shorter time period than the time period set in case the normal mode is selected.

A computer program may further include a history storing module for storing a history of the evaluating information, wherein the evaluating time period setting module changes the time period using the history of the evaluating information.

A computer program may further include an evaluation result output module for providing output information including sound or image information according to the evaluating information, and outputting the output information according to the input timing and the mode, wherein the output module outputs the sound or image according to the output information.

According to the computer program of the present invention, preferably the output module outputs the sound or image on timing changed from the input timing by a delaying interval set according to the mode.

According to the computer program of the present invention, preferably the evaluating time period setting module can change the time period according to output tempo of the sound.

According to the computer program of the present invention, preferably the evaluating time period setting module sets width of the time period in case the sound is outputted on a slower tempo to be broader than that of the time period in case the voices are outputted on a faster tempo.

According to the computer program of the present invention, preferably when a plurality of time period are set in a series of sound, the evaluating time period setting module sets the plurality of time period not to overlap with one another.

According to a further aspect of the present invention, a computer program for evaluating input timing of a user includes a data setting module for setting a setting data group including a plurality of sound or image data, and outputting each of setting data of the setting data group on a predetermined output timing, an output module for continuously outputting sound or image based on the setting data group to the user, a timing detecting module for detecting input timing of the user according to the setting data group, and an evaluating module for providing evaluating information according to a result of comparing output timing group, which includes the plurality of output timing, with a input timing group, which includes the plurality of input timing corresponding to the data group, and outputting output information according to the evaluating information, wherein the output module changes the sound or image based on the output information.

According to the computer program of the present invention, preferably the data setting module further outputs identifying information which identifies each of setting data of the setting data group, and the evaluating module selects one output information from the plurality of output information based on the identifying information and the evaluating information.

According to the computer program of the present invention, preferably the evaluating module selects one evaluating information from the evaluating information group based on the identifying information and a result of the comparison.

According to a further aspect of the present invention, a recording medium for storing computer program for evaluating input timing of a user includes an output module for continuously outputting sound or image to the user, a timing detecting module for detecting input timing of the user according to the sound or image, an evaluating time period setting module for setting up a changeable time period according to output timing of the sound or image outputted continuously, and an evaluating module for comparing the time period with the input timing, and providing evaluating information according to a result of the comparison.

According to a further aspect of the present invention, a recording medium for storing computer program for evaluating input timing of a user includes a data setting module for a setting data group from a plurality of sound or image data and outputting each of setting data of the setting data group on the output timing, an output module for continuously outputting sound or image based on the setting data group to the user, a detecting module for detecting input timing of the user according to the setting data group, and an evaluating module for comparing an output timing group, which includes the plurality of output timing, with an input timing group, which includes the plurality of input timing corresponding to the setting data group, providing evaluation information according to a' result of the comparison, and outputting output information according to the evaluating information.

According to a further aspect of the present invention, a timing evaluating apparatus for evaluating input timing of a user includes an output unit for continuously outputting sound or image to the user, a timing detecting unit for detecting input timing of the user according to the sound or image, an evaluating time period setting unit for setting up a changeable time period according to output timing of the sound or image outputted continuously; and an evaluating unit for comparing the time period with the input timing, and providing evaluating information according to a result of the comparison.

According to a further aspect of the present invention, a timing evaluating apparatus includes a data setting unit for setting a setting data group from a plurality of sound or image data, and outputting each of setting data of the setting data group on predetermined output timing, an output unit for continuously outputting sound or image to the user based on the setting data group, a detecting unit for detecting input timing of the user according to the setting data group, and an evaluating unit for comparing an output timing group, which includes the plurality of output timing, with an input timing group, which includes the plurality of input timing corresponding to the setting data group, providing evaluation information according to a result of the comparison, and outputting output information according to the evaluating information, wherein the output unit changes the sound or image based on the output information.

According to a further aspect of the present invention, a timing evaluating system includes an input detecting apparatus for detecting input of a user and a timing evaluating apparatus for evaluating input timing of the user, wherein the input detecting apparatus detects input of the user, and transmits information about the input to the timing evaluating apparatus, and the timing evaluating apparatus includes, an output unit for continuously outputting sound or image to the user, a timing detecting unit for detecting input timing of the user according to the sound or image, using the input information transmitted from the input detecting apparatus, an evaluating time period setting unit for setting up a changeable time period according to output timing of the sound or image outputted continuously, and an evaluating unit for comparing the time period with the input timing, and providing evaluating information according to a result of the comparison.

According to a further aspect of the present invention, a timing evaluating system includes an input detecting apparatus for detecting input of a user, and a timing evaluating apparatus for evaluating input timing of the user, wherein the input detecting apparatus detects input of the user, and transmits information about the input to the timing evaluating apparatus, and the timing evaluating apparatus includes, a data setting unit for setting a setting data group from the plurality of sound or image data, and outputting each of setting data of the setting data group on the output timing, an output unit for continuously outputting sound or image to the user based on the setting data group, a timing detecting unit for detecting input timing of the user according to the setting data group using information about the input received from the input detecting unit, and an evaluating unit for comparing an output timing group, which includes the plurality of output timing, with an input timing group, which includes the plurality of input timing corresponding to the setting data group, providing evaluation information according to a result of the comparison, and outputting output information according to the evaluating information, wherein the output unit changes the sound or image based on the output information.

According to a further aspect of the present invention, a computer program for evaluating input timing of a user includes a mode setting module for selecting one mode from a plurality of modes, an evaluating time period setting module for setting an evaluating time period according to the mode chosen by the mode setting module, an input detecting module for detecting input timing of the user, and an evaluating module for providing evaluating information indicating different evaluation result in case the timing detected by the input detecting module is included in the time period from in case the timing is not included in the time period.

According to a further aspect of the present invention, a computer program for evaluating input timing of a user includes an sound output module for outputting sound, an evaluating time period setting module for setting evaluating time periods to have different time width according to speed of the sound outputted by the sound output module, an input detecting module for detecting input timing of the user, and an evaluating module for providing evaluating information indicating different evaluation result in case the timing detected by the input detecting module is included in the time period from in case the timing is not included in the time period.

According to a further aspect of the present invention, a computer program for evaluating input timing of a user includes an output module for outputting sound data or image data, a receiving module for receiving movement signal from a part of a body of a user, and a determining module for determining correspondence of a continuous data group of the image or sound data outputted for a predetermined period with the movement signal from the part of body, the body moving according to the continuous data group, wherein the output module changes and outputs sound or image based on a result of the determination.

The various aspects of the present invention relating to computer programs also refer to methods that are conducted using these computer programs.

The summary of the invention does not necessarily describe all necessary features of the present invention. The present invention may also be a sub-combination of the features described above. The above and other features and advantages of the present invention will become more apparent from the following description of the embodiments taken in conjunction with the accompanying drawings, wherein

Fig. 1 shows a configuration of a timing evaluating system according to the present embodiment.

Fig. 2 shows a functional block of the timing evaluating system.

Fig. 3 shows the detail of the input detecting apparatus.

Fig. 4 shows an outward appearance of the input detecting apparatus for arms.

Fig. 5 shows an inside structure of the input detecting apparatus for arms.

Fig. 6 shows appearances of the input detecting apparatus for legs.

Fig. 7 shows inside structure of the input detecting apparatus for legs.

Fig. 8 is a perspective view of an input detecting apparatus according to another embodiment of the present invention.

Fig. 9 is an exploded perspective view of an input detecting apparatus according to still another embodiment of the present invention.

Fig. 10 shows the reference time setting unit in detail.

Fig. 11 shows a table of the data setting unit.

Fig. 12 shows an example of a time width setting file for arms that is stored by the reference time setting unit.

Fig. 13 shows an example of a time width setting file for legs.

Fig. 14 shows a time chart set by the evaluating time period setting unit.

Fig. 15 shows a table for storing information.

Fig. 16 shows a time chart of a time period that the evaluating time period setting unit adjusts.

Fig. 17 shows a processing flow of the timing evaluating apparatus.

Fig. 18 shows processing of S100 shown in Fig. 17 in detail.

Fig. 19 shows processing step S120 of the evaluating unit, shown in Fig. 16, in detail.

Fig. 20 shows processing step S125 of the evaluation result output unit, shown in Fig. 17, in detail.

Fig. 21 shows an example of the output unit.

Fig. 22 is a display showing a consumed calorie value.

Fig. 23 shows a result screen displayed when a predetermined exercise is finished.

Fig. 24 shows a functional block diagram of the timing evaluating system according to another embodiment of the present invention.

Fig. 25 shows the processing of the evaluating unit.

Figs. 26 to 28 are examples of image data of the character displaying the monitor.

Fig. 29 shows a processing flow of the evaluating unit.

Fig. 30 shows another processing flow of the evaluating unit.

Fig. 31 is a block diagram indicating hardware construction of the timing evaluating apparatus.

The invention will now be described based on the preferred embodiments, which do not intend to limit the scope of the present invention, but exemplify the invention. All of the features and the combinations thereof described in the embodiment are not necessarily essential to the invention.

Thereby, the reference numbers introduced for the individual units of the described systems are analogously used for respective software modules.

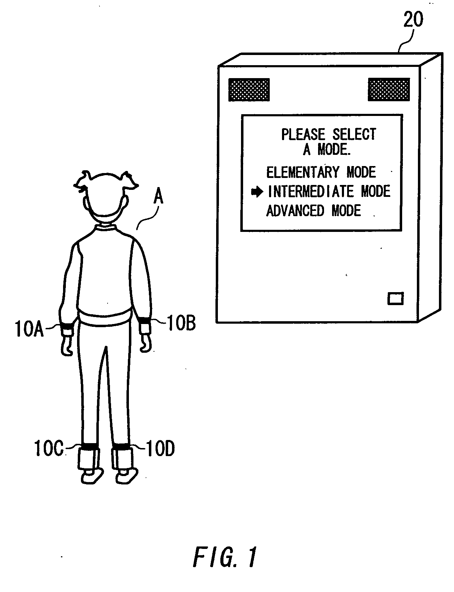

Fig. 1 shows a configuration of a timing evaluating system according to the present embodiment. The timing evaluating system has an input detecting apparatus 10 and a timing evaluating apparatus 20. The input detecting apparatus 10 according to the present embodiment includes input detecting apparatuses 10a-10d, and these apparatuses 10a-10d are mounted on the arms and the legs of a user A, and the apparatuses 10a-10d detect body movement of the user A as an input from the user A.

The input detecting apparatuses 10a-10d and the timing evaluating apparatus 20 transmit and receive signals using infrared radiation. However, a wireless communications such as using a radio wave or cable communications other than the infrared communications may be used for communication. The input detecting apparatuses 10a-10d and the timing evaluating apparatus 20 may transmit and receive signals through repeaters.

In the present embodiment, the timing evaluation system is a game system. First, the user A moves according to the character's movement displayed in the timing evaluating apparatus 20, the input detecting apparatuses 10a-10d mounted on the user A's arms and/or legs transmit the input detecting information of the user A's movement to the timing evaluating apparatus 20. The timing evaluating apparatus 20 evaluates conformability between the movement of the character and the input detecting information, and outputs the evaluating information in the form of image or sound. Details of these technical aspects will be described later.

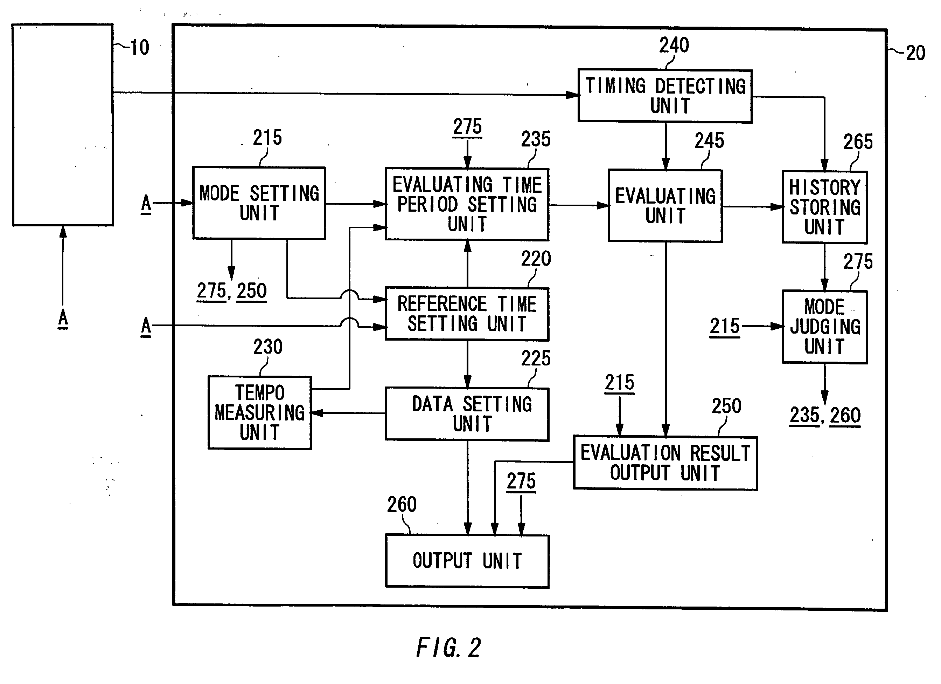

Fig. 2 shows a functional block of the timing evaluating system. Each input detecting apparatuses 10a-10d transmits to the timing evaluating apparatus 20 the input detecting information of the movement of the user A's body and the identification information that identifies each input detecting apparatuses 10a-10d which has detected the corresponding input.

The timing evaluating apparatus 20 has a mode setting unit 215, a reference time setting unit 220, a data setting unit 225, a tempo measuring unit 230, an evaluating time period setting unit 235, a timing detecting unit 240, an evaluating unit 245, an evaluation result output unit 250, an output unit 260, a history storing unit 265, a history database 270, and a mode judging unit 275.

The mode setting unit 215 selects one mode from a plurality of modes according to the input of the user A, and outputs it to the evaluating time period setting unit 235 and the evaluation result output unit 250. The modes include an elementary mode, an intermediate mode and an advanced mode.

The reference time setting unit 220 sets a reference time by the input of the user A, and outputs it to the data setting unit 225 and the evaluating time period setting 235 with the movement information which is to be performed by the user A at a reference time. The reference time is a time point that indicates the timing at which the user A has to perform an input.

When the data setting unit 225 receives a reference time from the reference time setting unit 220, the data setting unit 225 outputs to the output unit 260 the setting data that includes at least one of the sound data and the image data, which indicates the movement that has to be performed by the user A, at the receipt reference time. The data setting unit 225 also outputs background sound and/or image data to the output unit 260.

The tempo measuring unit 230 measures the speed of a sound of the sound data, and outputs it to the evaluating time period setting unit 235 when the tempo measuring unit 230 receives the background sound data from the data setting unit 225.

The evaluating time period setting unit 235 sets a time period for performing an evaluation according to the mode set by the mode setting unit 215, the reference time set by the reference time setting unit 220, output of the tempo measuring unit 230, and the judging information of the mode judging unit 275, and outputs it to the evaluating unit 245. The timing detecting unit 240 outputs the input detecting information and the identification information to the evaluating unit 245.

The evaluating unit 245 outputs evaluating information, which is created according to the output of the timing detecting unit 240 and the output of the evaluating time period setting unit 235, to the evaluation result output unit 250 and the history storing unit 265.

The evaluation result output unit 250 outputs the output information that includes at least one of the image and the sound information according to the evaluating information and the mode set by the mode setting unit 215.

The output unit 260 outputs the image and the sound based on the setting data received from the data setting unit 225 and the output information received from the evaluation result output unit 250.

The history storing unit 265 stores a history of the evaluating information. The history storing unit 265 stores the evaluating information, which corresponds to the user identification information for identifying a user and the mode set by the mode setting unit 215.

The mode judging unit 275 outputs to the output unit 260 and the the evaluating time period setting unit 235 the judging result of whether or not the mode set by user is correct when the mode judging unit 275 receives the history information of the evaluating information from the history storing unit 265.

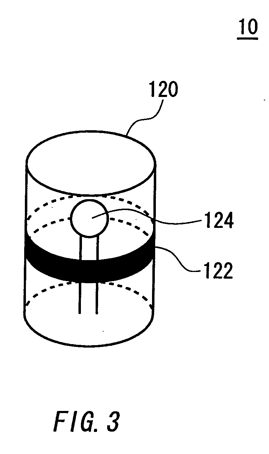

Fig. 3 shows the detail of the input detecting apparatus 10. The input detecting apparatus 10 has a substantially cylindrical shape. The input detecting apparatus has a accommodating member 120 made of an hollow insulator, a first electrode 122 provided on the side face of the accommodating member 120 and a second electrode 124 having a shape of a pole or a spring extended from an inside surface of the accommodating member 120. Preferably, the top end of the second electrode 124 is made to be heavy so that the second electrode 124 can be bent easily with the change of inertial force.

The first electrode 122 has a shape of a ring and is exposed around the whole inner side surface of the accommodating member 120. The second electrode 124 has elasticity so that it bends elastically with the change of inertial force and contacts to the first electrode 122. Then, the input detecting apparatus 10 detects the body movement of the user A as an input because the first and second electrodes 122 and 124 are short-circuited by contacting with each other.

Another example of the input detecting apparatus 10 may use a strain gauge made of piezo-electric material. That is, when a mechanical strain is created in the strain gauge, an electromotive force is created in the piezo-electric material by this strain. The input detecting apparatus 10 detects the body movement of the user A as an input based on this electromotive force. The input detecting apparatus 10 can detect strength of body movement of the user according to the magnitude of this electromotive force.

Moreover, the input detecting apparatus 10 detects strength of body movement of the user A by detecting the strength of collision between a vibrating object to a surrounding member by using a vibration sensor or by detecting a microscopic moving distance of a movable member in a surrounding member.

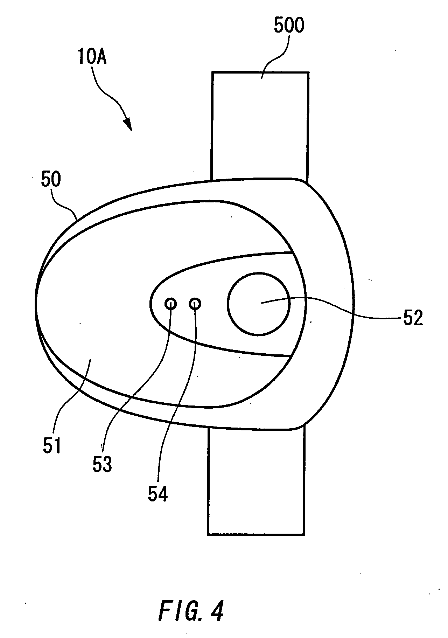

Fig. 4 shows an outward appearance of the input detecting apparatus 10a for mounting on the arms. The input detecting apparatus 10b to be mounted on the arms, has the same configuration with the input detecting apparatus 10a. The input detecting apparatus for arms 10a has a body 50 and a band 500. The body 50 includes a light emitting window unit 51, from which the infrared radiation is emitted, a selecting button 52, by which the user can select whether the number of the player is one or two, a normal speed indicating unit 53 that turns on a light when the user A moves in a normal speed, and a high speed indicating unit 54 that turns on a light when the user A moves in a high speed.

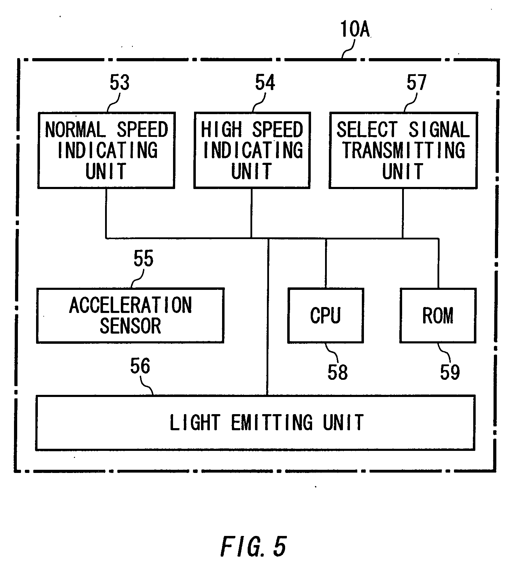

Fig. 5 shows an inside structure of the input detecting apparatus for arms 10a. The input detecting apparatus 10b to be mounted on the arms, has the same configuration with the input detecting apparatus 10a. The input detecting apparatus for arms 10a has the normal speed indicating unit 53, the high speed indicating unit 54, an acceleration sensor 55, a light emitting unit 56, a selection signal transmitting unit 57, a CPU 58 and a ROM 59.

The acceleration sensor 55 is a sensor that uses a strain gauge, which generates an electromotive force by a mechanical strain applied on a piezo-electric material. The acceleration sensor 55 detects the movement of arm and/or leg of the user A and strength of the movement. The light emitting unit 56 emits infrared radiation based on the output of the acceleration sensor 55. The selection signal transmitting unit 57 transmits to the CPU 58 the information that indicates whether the number of player is one or two based on the operation of the selecting button. The CPU 58 controls the process of each constituting units of the input detecting apparatus for arms 10a. The ROM 59 is a read-only memory for storing a control programs of the CPU 58.

The CPU 58 lights the normal speed indicating unit 53 in case the electromotive force [mV] is in the range from a small threshold value Vs [mV] to a large threshold value Vb [mV] which makes large response, and lights the high speed indicating unit 54 in case the electromotive force [mV] is more than the large threshold value Vb [mV]. The user A can see the normal speed indicating unit 53 and the high speed indicating unit 54, and checks the speed of movement of himself or herself.

The acceleration sensor 55 may include two sensors, one for normal speed detection and another for high speed detection. In this case, the CPU 58 lights the normal speed indicating unit 53 and the high speed indicating unit 54 respectively, based on outputs of the two acceleration sensor.

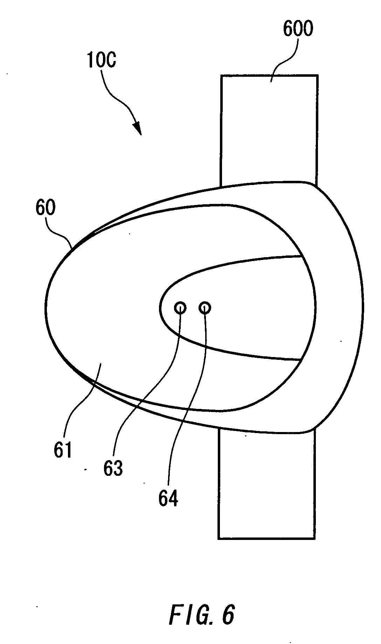

Fig. 6 shows appearances of the input detecting apparatus for legs 10c (with 10d). The input detecting apparatus for legs 10c includes a body 60 and a band 600. The body 60 includes the light emitting windows unit 61 for emitting infrared signals, a normal speed indicating unit 63 and a high speed indicating unit 64.

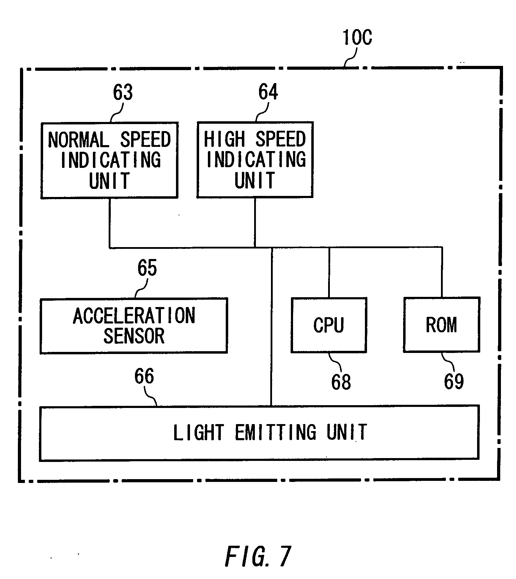

Fig. 7 shows inside structure of the input detecting apparatus for legs 10c or 10d. The input detecting apparatus for legs 10c or 10d includes a normal speed indicating unit 63, a high speed indicating unit 64, an acceleration sensor 65, a light emitting unit 66, a CPU 68 and a ROM 69. Since the normal speed indicating unit 63, the high speed indicating unit 64, the acceleration sensor 65, the light emitting unit 66, the CPU 68, and the ROM 69 are substantially identical to the normal speed indicating unit 53, the high speed indicating unit 54, the acceleration sensor 55, the light emitting unit 56, the CPU 58, and the ROM 59. Accordingly, the normal speed indicating unit 63, the high speed indicating unit 64, the acceleration sensor 65, the light emitting unit 66, the CPU 68 and the ROM 69 will not be discussed or illustrated in detail herein.

These input detecting apparatuses 10a-10d may be used on any portion of human body such as head, trunk, neck, and so on, including but not limited to arms and legs. Also, the input detecting apparatuses 10a-10d may detect sound of user A according to output sound of the timing evaluating apparatus 20, and the timing evaluating apparatus 20 may evaluate correspondence of this sound with sound.

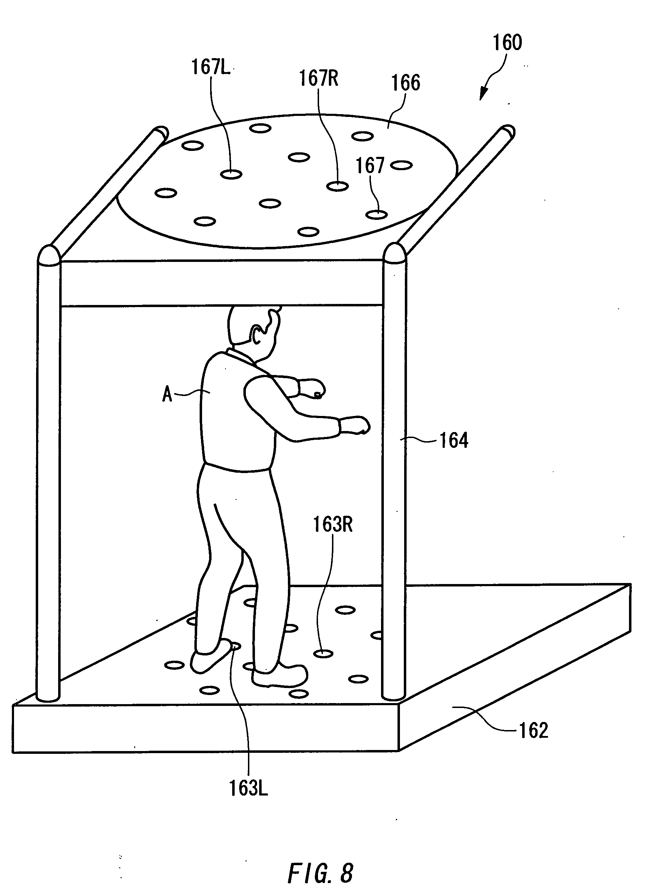

Fig. 8 is a perspective view of an input detecting apparatus 10 according to another embodiment of the present invention. The input detecting apparatus 10 includes a pedestal unit 162, a frame 164 extended from the pedestal unit 162 and a ceiling unit 166 supported by the frame 164. The pedestal unit 162 is a stage on which the user A moves, and includes a plurality of light emitting units 163. The ceiling unit 166 includes a plurality of light receiving units 167 arranged on corresponding locations of the light emitting unit 163.

The movement of user A is detected by the light receiving unit 163 when a part of the body, such as arm or leg, is placed on a specific light emitting unit 163 while the user A moves. Additionally, the pedestal unit 162 may do marking which indicates initial position of legs of the user A, and the light emitting units 163R and 163L may be provided on those locations.

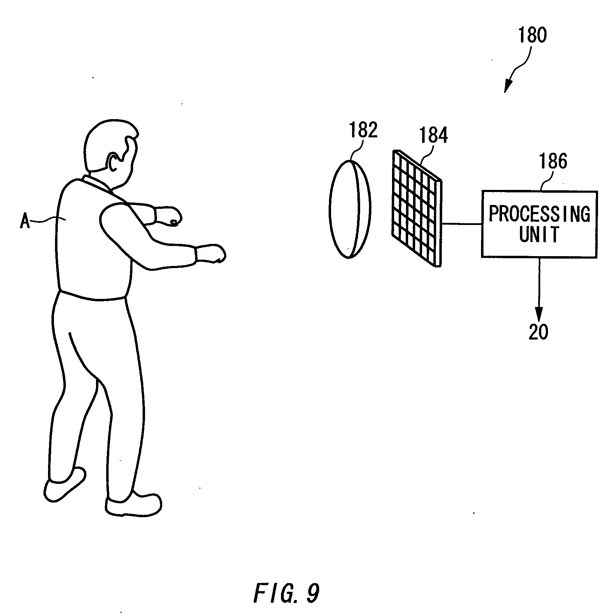

Fig. 9 is an exploded perspective view of an input detecting apparatus 10 according to another embodiment of the present invention. The input detecting apparatus 10 is an artificial retina sensor arranged in front of the user A, and includes a lens 182, a CMOS sensor 184 and a processing unit 186. The lens 182 focuses image of the user A on the CMOS sensor 184.

The CMOS sensor 184 receives image of the user A by a plurality of light receiving pixels, and outputs electronic signal. The processing unit 186 processes electronic signal outputted from the CMOS sensor 184 into image while controlling the CMOS sensor 184. The input detecting unit 10 detects the movement of the user A by comparing the image of user A at a predetermined time interval in the processing unit 186, and outputs detected input detecting information to the timing evaluating apparatus 20.

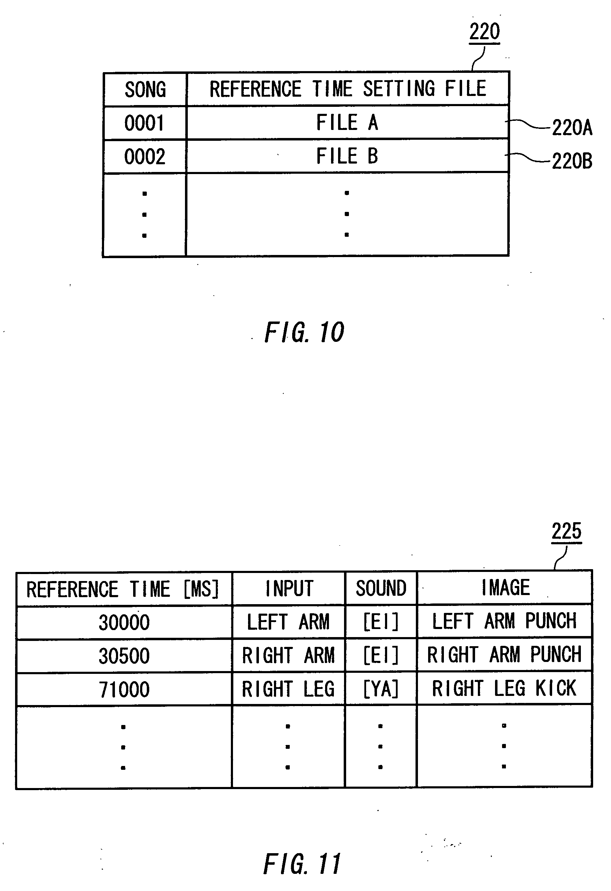

Fig. 10 shows the reference time setting unit 220 in detail. The reference time setting unit 220 stores reference time files 220A and 220B corresponding to titles of songs chosen by input of the user A. The reference time setting unit 220 stores continuously a plurality of reference times in a reference time file, and stores movement information indicating movement that the user A has to perform at each of the reference times, and outputs these to the data setting unit 225.

Fig. 11 shows a table of the data setting unit 225. The data setting unit 225 continuously outputs setting data including sound and image data at a reference time.

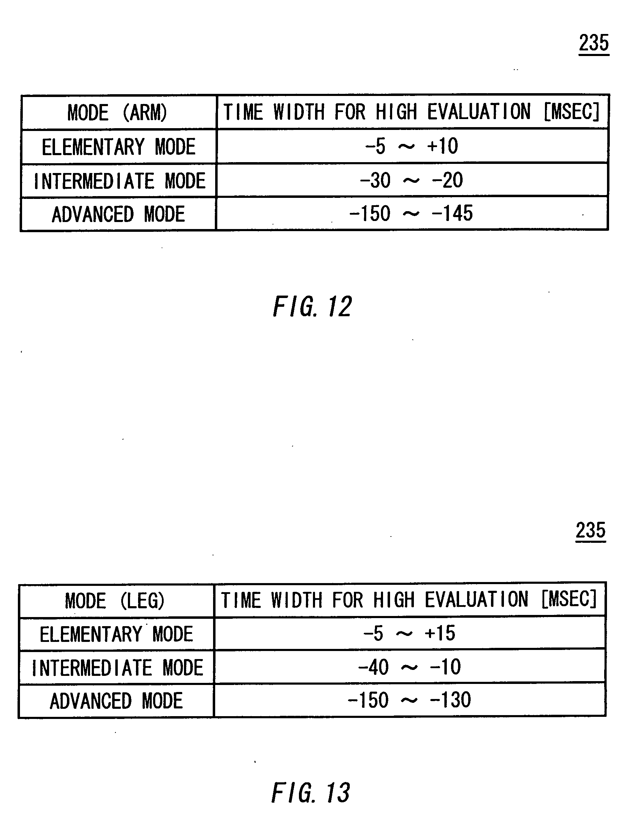

Fig. 12 shows an example of a time width setting file for arms that is stored by the reference time setting unit 235. The evaluating time period setting unit 235 stores information specifying time width as the time width setting file according to mode. The evaluating time period setting unit 235 makes the time width narrower and a starting point of the time width earlier against the reference time as the level of mode is higher.

In particular, the evaluating time period setting unit 235 sets an interval from time which is 5 mS before the reference time to time which is 10mS after the reference time, as a time width for high evaluation in case of the elementary mode. The evaluating time period setting unit 235 sets an interval from time which is 30 mS before the reference time to time which is 20 mS before the reference time as the time width for high evaluation in case of the intermediate mode. Further, The evaluating time period setting unit 235 sets an interval from time which is 150 mS before the reference time to time which is 145 mS before the reference time as the time width for high evaluation in case of the veteran mode.

Fig. 13 shows an example of a time width setting file. The evaluating time period setting unit 235 stores a file for setting time width for legs. In this case, the evaluating time period setting unit 235 stores the time width setting file for legs which sets different time widths from those for arms. In other words, the evaluating time period setting unit 235 sets different time widths for legs from those for arms.

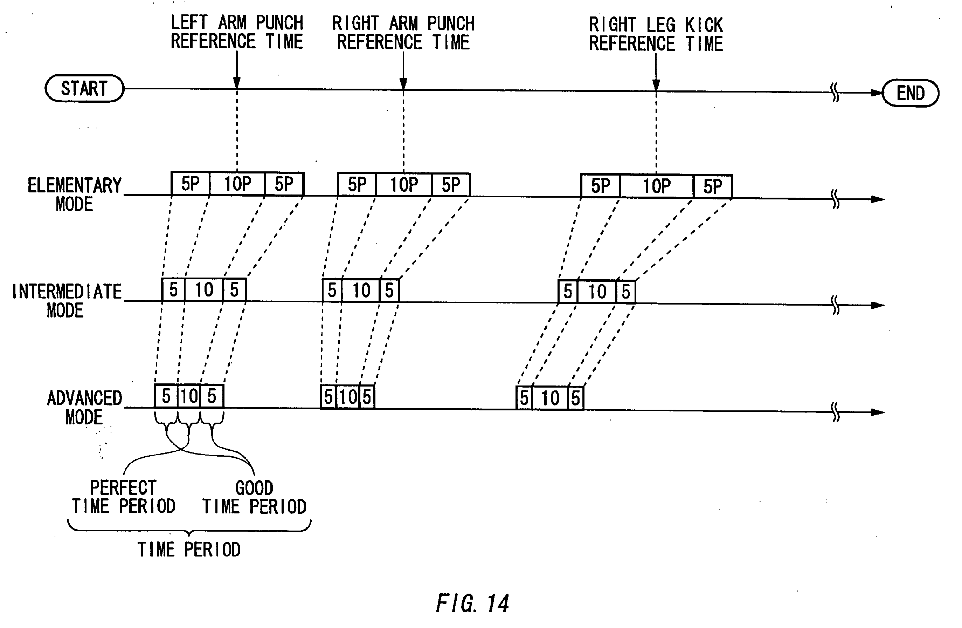

Fig 14 shows a time chart set by the evaluating time period setting unit 235. The evaluating time period setting unit 235 sets a time period to include earlier time than a reference time based on a reference time outputted by the reference time setting unit 220 and the time width setting file illustrated in Figs. 12 and 13.

The evaluating time period setting unit 235 sets a time period of a different time width and different points of times according to movement which user A has to perform. By this, it is possible to set most suitable time period and evaluate accurately for either a punch or a kick that has different time to finish the movement from start. The evaluating time period setting unit 235 may set different time period according to the kind of input movement of user (for example, a jab, a straight, a hook, a turning kick, a falling chop, etc.).

The evaluating time period setting unit 235 sets a different time width and a time period of a different point of time according to a mode set by the mode setting unit 215, even if it has the same reference time. By having a different time width according to a mode, it is possible to evaluate more strictly as the level of mode is higher.

Also, by having a different point of time according to a mode, it is possible to achieve effects as follows: in case the input detecting apparatus 10 cannot determine start and finish of a user's movement, a preparatory movement, such as pulling his/her hands, is performed is detected as input because the time when movement is started is earlier in case of a veteran, as shown in Fig. 3. On the other hand, beginning movement is detected in case of the intermediate, and finishing movement is detected in case of the elementary. If a different time is used according to a mode, it is possible to evaluate accurately in these cases.

The evaluating time period setting unit 235 may also set two-step-time-period, such as a perfect time period for even higher evaluation and a good time period for higher evaluation, as shown.

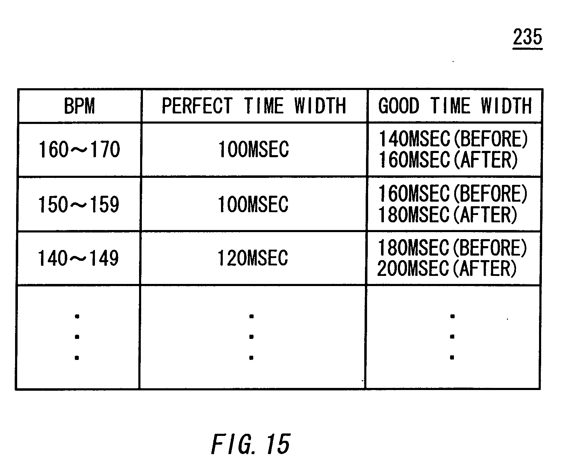

Fig. 15 shows a table for storing information which designates a time width according to speed of sound (in particularly, the number of beats per unit time [BPM]) measured by the tempo measuring unit 230.

In case speed of sound changes, there may be an overlapped time period with another one(s) out of a plurality of those because the evaluating time period setting unit 235 changes a time width of a time period for evaluating according to the speed of sound. Thus, the evaluating time setting unit 235 adjusts time periods not to be overlapped with another one(s).

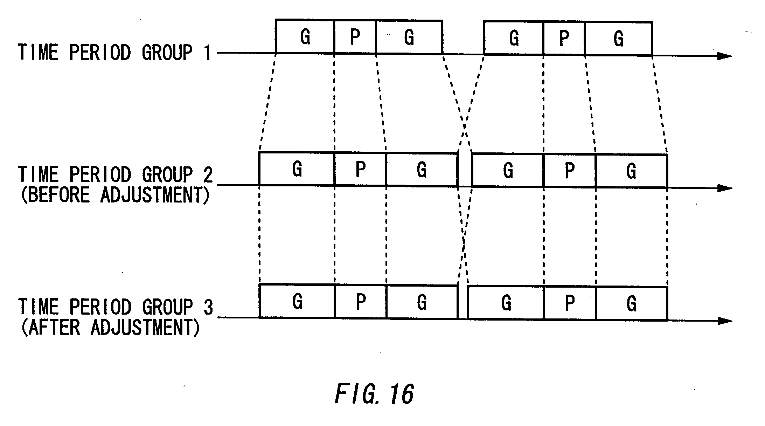

Fig. 16 shows a time chart of a time period that the evaluating time period setting unit 235 adjusts. First of all, the evaluating time period setting unit 235 sets a time period group 1 so that two time periods are not overlapped with each other. Next, if the speed of sound becomes slower, there may be an occasion that the evaluating time period setting unit 235 sets a time period group 2 so that two time periods are overlapped with each other in order for extending the time width (before adjusting). Here, the evaluating time period setting unit 235 adjusts a width of a time period and sets a time period group 3 so that two time periods are not overlapped with each other, in case that two time periods overlap or may overlap with each other (after adjusting).

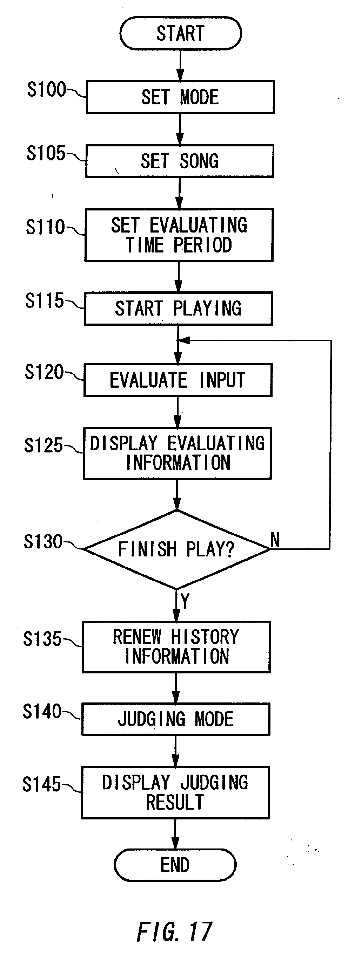

Fig. 17 shows a processing flow of the timing evaluating apparatus 20. First, the mode setting unit 215 selects and sets a mode according to input of a user (S100), and the timing evaluating apparatus 20 selects a song according to input of a user (S105). The timing evaluating apparatus 20 may select tempo of the song according to input of the user.

Next, when the reference time setting unit 220 sets a reference time according to this song, the evaluating time period setting unit 235 sets a time period according to the reference time and the mode set (S100).

Then, the data setting unit 225 outputs sound and image data of the song to the output unit 260, and starts playing (S115).

The output unit 260 displays a movement, which the user A has to perform, as sound and/or image based on setting data of the data setting unit 225, and when the user A performs a predetermined movement according to these, the input detecting apparatuses 10a-10d detect the corresponding movement as input.

When the evaluating unit 245 receives this input detecting information from the timing detecting unit 240, the evaluating unit 245 compares it with the set time period and outputs evaluating information to the evaluation result output unit 250 (S120).

The evaluation result output unit 250 outputs output information including at least one of image and sound information according to evaluating information received (S125). The timing evaluating apparatus 20 repeats above described processing of S120 and S125 until the song finishes (S130).

After that, the history storing unit 265 stores the evaluating information (S135). The mode judging unit 275 determines whether or not the mode set by the user is correct (S140), and outputs the determining results to the determining result output unit 260 and the evaluating time period setting unit 235 (S145). Additionally, it may store the difference between output timing of the timing detecting unit 240 and that of the reference time setting unit 220, instead of storing the evaluating information. In this case, it stores preferably user ID identifying the user A with another user(s).

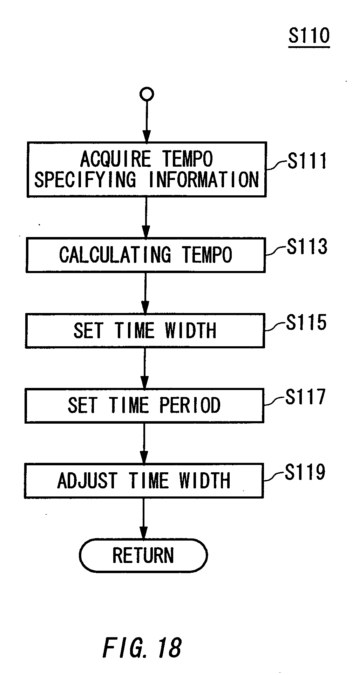

Fig. 18 shows processing of S100 shown in Fig. 17 in detail. When the tempo measuring unit 230 receives background sound data from the data setting unit 225, it extracts information specifying speed of sound data, and measures the speed of sound by using this, and outputs it to the evaluating time period setting unit 235 (S113).

The information extracted by the tempo measuring unit 230 is preferably sound reflecting tempo or rhythm of the song and may includes a specific frequency (ex, base sound of a music), a specific waveform, a specific amplitude, and so on. Also, the tempo measuring unit 250 may measure number of outputs of specific sound for a predetermined time as speed of the sound.

The evaluating time period setting unit 235 sets time width of a time period according to the set mode and speed of sound (S115), and sets a time period according to the reference time set by the reference time setting unit 220 (S117). The evaluating time period setting unit 235 sets time width broader in case of faster sound. The time period setting unit 235 may use a time width DB that memories time periods, of which time width changes according to the speed of a song but not to output of the tempo measuring unit 250, in a song in advance.

The evaluating time period setting unit 235 solves the overlap problem by adjusting width of a time period in case set time period overlaps with another time period (S119). Preferably, the timing evaluating apparatus 20 performs this steps of S111 to S119 even during playing. By doing this, the timing evaluating apparatus 20 can cope with cases where tempo changing operation is set during playing a song, or where a user changes tempo during playing.

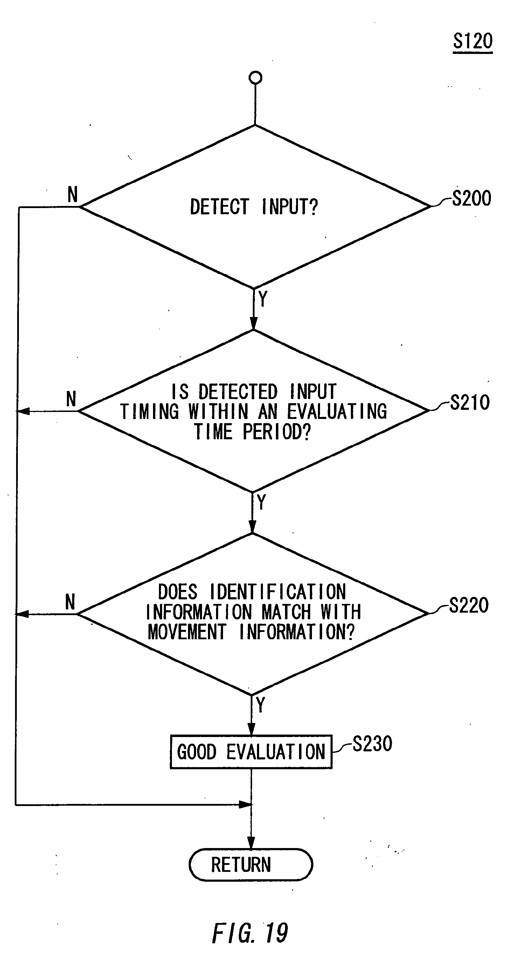

Fig. 19 shows processing step S120 of the evaluating unit 245, shown in Fig. 16, in detail. The evaluating unit 245 detects input (S200), and creates evaluating information of good evaluation if detected timing is included in a time period of the evaluating time period setting unit 235 (S210) and identification information of the input detecting apparatuses 10a-10d coincide with movement information corresponding to the time period (S230).

The mode judging unit 275 performs determination by using this evaluating information. In the concrete, the mode judging unit 275 compares the number of set time period with the number of good evaluation, and determines the last play to be success if frequency of good evaluation is more than a predetermined value (for example, more than 80 percent of the number of time period), otherwise determines to be failure.

The evaluating time period setting unit 235 makes time width shorter in case a result of determining is memorized as success in the mode judging unit 275 based on a result of determining in the last play, and makes the time width longer in case a result of determining is memorized as failure in the mode judging unit 275.

As described above, by adjusting width of a time period, a user A who fails in the last play is easy to succeed in the next play, and a user A who succeeds in the last play is easy to fail if he/she is careless. Accordingly, each user may enjoy playing.

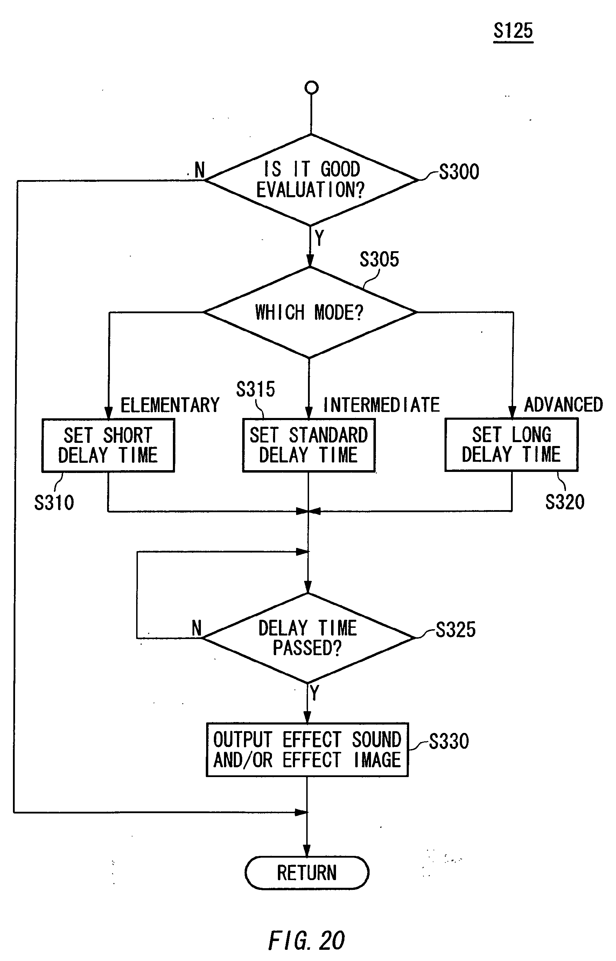

Fig. 20 shows processing step S125 of the evaluation result output unit 250, shown in Fig. 17, in detail. When the evaluation result output unit 250 receives good evaluation from the evaluating unit 245 (S300), the evaluation result output unit 250 sets a delay time (S310, S315, S320) according to a mode (S305). Then, when delay time set according to the mode has passed (S325), the evaluation result output unit 250 outputs output information of effect sound and effect image to the output unit 260 (S330).

The delay time is set for the output timing of output information to coincide with finishing time of a user's movement. In other words, the input detecting timing is one of a preparatory movement in case of a veteran. Therefore, if the evaluation result output unit 250 outputs output information straightly after detecting input, effect sound and effect image are outputted before the movement is actually completed. The evaluation result output unit 250 let the effect sound or effect image to coincide with real completion of a movement by outputting output information after the delay time has passed from when the input is detected.

Preferably, the evaluation result output unit 250 also provides output information including different image data, according to the input detecting apparatuses 10a-10d.

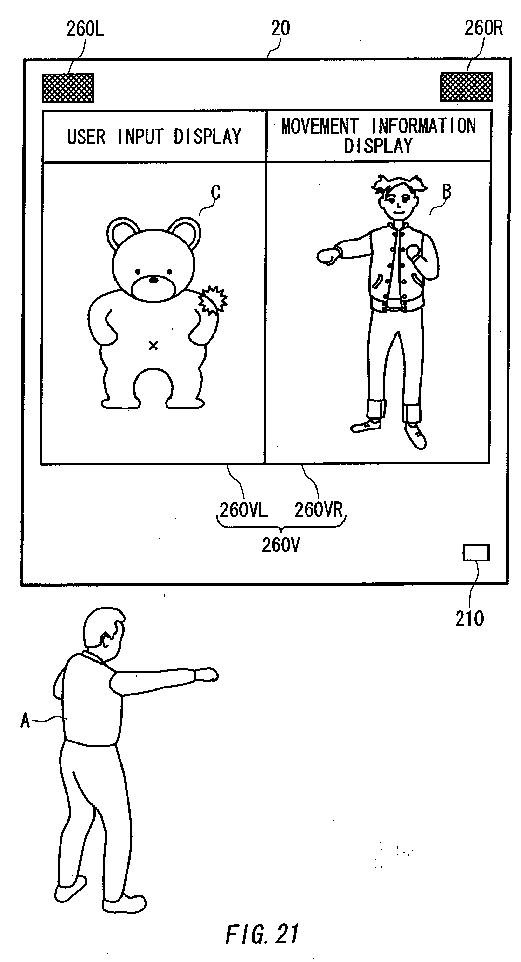

Fig. 21 shows an example of the output unit 260. In this example, the timing evaluating apparatus 20 includes the output unit 260 in front of it. The output unit 260 includes a monitor 260V for outputting image and speakers 260R and 260L for outputting sound.

The monitor 260V includes a image monitor 260VR displaying movement B which a user has to perform based on setting data of the data setting unit 225, and a image monitor 260VL displaying effect C of movement which the user has performed based on output information of the evaluation result output unit 250.

According to the present embodiment, although the monitor 260V displays a character that has a shape of a human, the monitor may display a character of any shape if it is able to indicate the movement which user has to perform. The monitor 260V may display a plurality of characters B's corresponding to a plurality of users A's. The monitor 260V may display image observed in many point of view of a same character B.

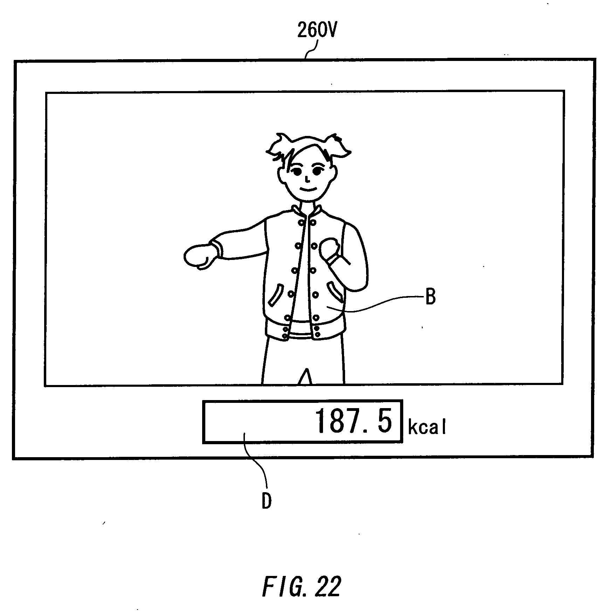

Fig. 22 is a display showing a consumed calorie value. The monitor 260V also displays a consumed calorie value D in addition to the character B. The monitor 260V displays this picture when a kind of movement of the character changes or at every predetermined interval of time. The consumed calorie value D is an expected calorie value that the user A consumes during this exercise.

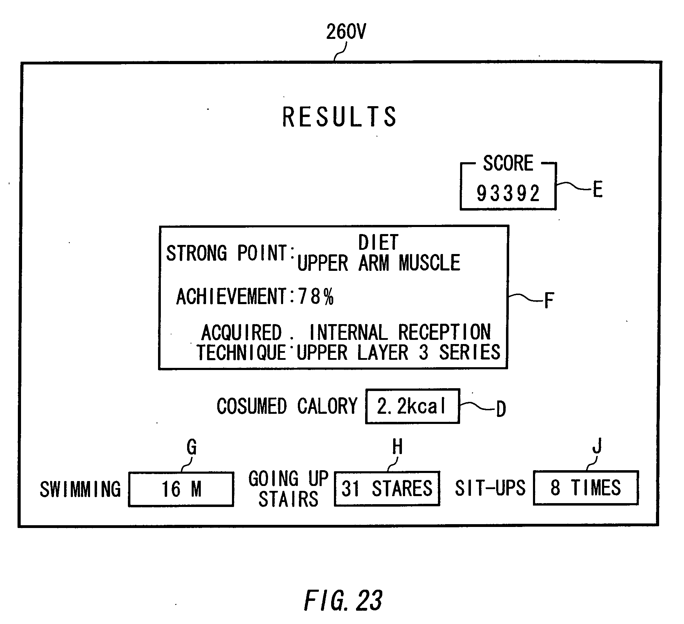

Fig. 23 shows a result screen displayed when a predetermined exercise is finished. The monitor 260V displays a score E, a result F, a consumed calorie value D and various conversion values of exercises G, H and J.

The score E is a measured value based on evaluating information of the evaluating unit 245. The result F displays achievement rate based on a determining result of the mode judging unit 275 and individual movement of which correspondence is good, in addition to strong points based on kinds of exercises performed. The various conversion values of exercises G, H and J indicate amount of exercises which are converted into those of swimming, going up stares and strengthening abdominal muscles, respectively.

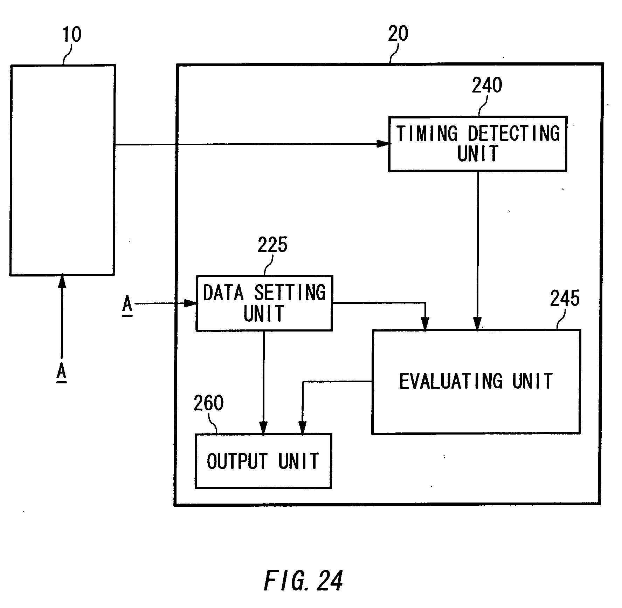

Fig. 24 shows a functional block diagram of the timing evaluating system according to another embodiment of the present invention. The input detecting apparatuses 10a-10d transmit input detecting information of a user A's body movement, strength information of the user A's body movement, identification information identifying the input detecting apparatuses 10a-10d which detects corresponding input.

The timing evaluating apparatus 20 includes a data setting unit 225, a evaluating time period setting unit 235, a timing detecting unit 240, a evaluating unit 245, and a output unit 260.

The data setting unit 225 outputs setting data including at least one of sound and image data indicating movement which the user has to perform to the evaluating unit 245 and the output unit 260 according to input of the user A. The data setting unit 225 also outputs background sound and/or image data to the output unit 260.

The timing detecting unit 240 outputs input detecting information, identification information and strength information to the evaluating unit 245.

The evaluating unit 245 evaluates correspondence of output of the timing detecting unit 240 with setting data of the data setting unit 225, and outputs output information including at least one of image information and sound information according to this evaluation.

The output unit 260 outputs image and sound based on setting data received by the data setting unit 225 and output information received by the evaluating unit 245.

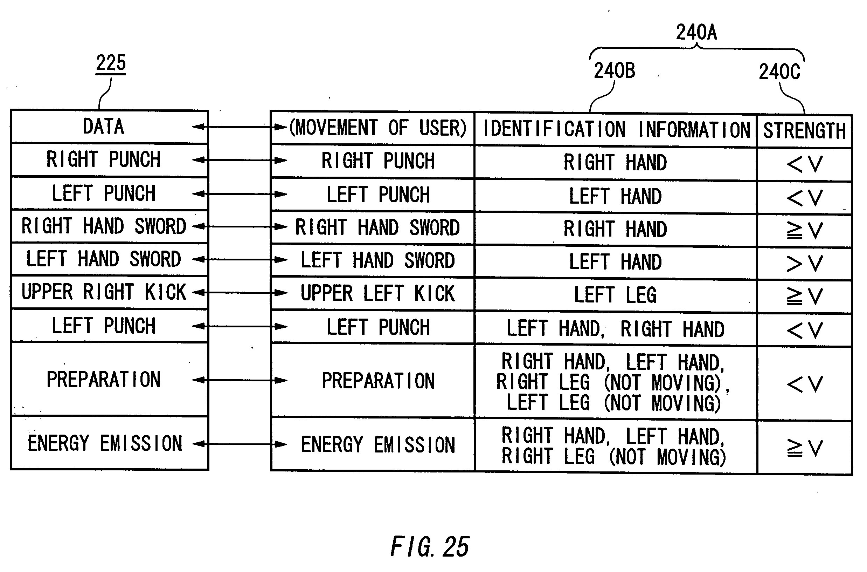

Fig. 25 shows the processing of the evaluating unit 245. When the evaluating unit 245 receives output 240A of the timing detecting unit 240, it extracts identification information 240B of the input detecting apparatuses 10a-10d and strength information 240C of a user's movement from the output 240A, and compares them with setting data 225A of the data setting unit 225.

Even with the same identification information 240B, the evaluating unit 245 may determine that the user has performed different movements by determining whether strength information 240C is larger than predetermined value or not, and compares the result of determining with setting data 225A.

When the evaluating unit 245 receives continuously a plurality of identification information 240B in a predetermined sequence, it also determines movement of the user and compares the result of determining with setting data 225A.

In case of setting data 225A1 to 225A3, Each setting data further includes a plurality of setting data. The setting data 225A1, or 'left punch', includes setting data of 'left hand' and 'right hand'. The setting data 225A2, or 'preparation', includes setting data of 'right hand', 'left hand', 'right leg' and 'left leg'. The setting data 225A3, or 'energy emission', includes setting data of 'right hand', 'left hand' and 'right leg'.

In the case of the setting data 225A1, the evaluating unit 245 evaluates a user's movement as good evaluation which has correspondence with input of the user A, if the following conditions (1) to (3) is satisfied;
(1) There are inputs of identification information 240B of 'left hand' and 'right hand'.
(2) Strength information 240C of (1) is smaller than a predetermined value V [mV].
(3) The difference between input detecting timing of (1) and output timing of setting data is smaller than a predetermined value.

In case of the setting data 225A2, the evaluating unit 245 evaluates a user's movement as good evaluation which has correspondence with input of the user A, if the following conditions (1) to (4) is satisfied;
(1) There are inputs of identification information 240B of 'right hand' and 'left hand'.
(2) There is no input of identification information 240B of 'right leg' and 'left leg'.
(3) Strength information 240C of (1) is smaller than a predetermined value V [mV].
(4) The difference between input detecting timing of (1) and output timing of the setting data is smaller than a predetermined value.

In case of the setting data 225A3, the evaluating unit 245 evaluates a user's movement as good evaluation which has correspondence with input of user A, if the following conditions (1) to (4) is satisfied;
(1) There are inputs of identification information 240B of 'right hand' and 'left hand'.
(2) There is no input of identification information 240B of 'the right leg'.
(3) Strength information 240C of (1) is smaller than a predetermined value V [mV].
(4) The difference between input detecting timing of (1) and output timing of the setting data is smaller than a predetermined value.

The comparing pattern of setting data 225A, identification information 240B and strength information 240C, shown in Fig. 25, are described as examples, and the present embodiment is not limited to these examples. For example, as for the 'preparation', since various movement or position patterns can be considered as preparatory movement, there may be various identification information 240B and/or strength information 240C for setting data of 'preparation' 225A. Since there is a stream of movement in continuous movement displayed by the character B, the next referred identification information 240B may be preferably decided by considering the last movement performed. Of course, this is not limited to the movement of 'preparation' but may be applied to every movement.

As described above, in determining the kind of continuous movement, it is preferable to decide setting data by considering previous or subsequent movement displayed by the character. Since there may be various patterns in 'stream of movement', the setting data 225A may preferably include a plurality of setting data so that it can cope with various patterns easily. Further, in case of determining movement individually without considering 'stream of movement', the setting data 225A may preferably include a plurality of setting data so that it can cope with more complex movement.

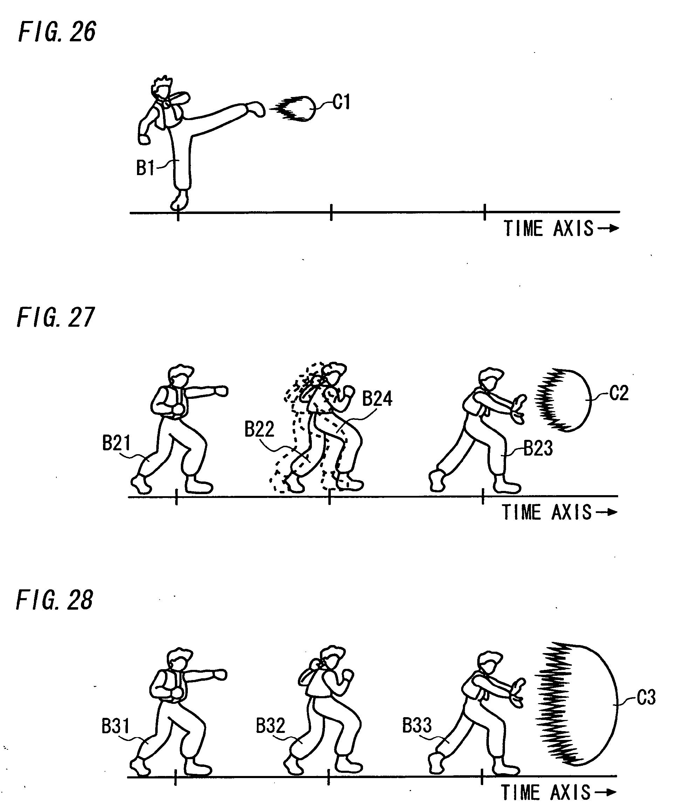

Figs. 26 to 28 are examples of image data of the character B displaying the monitor 260V. Especially, Fig. 26 shows only one image data B1 as an independent one from previous or subsequent movement. Fig. 27 and Fig. 28 show a plurality of image data B21 to B23 and B31 to B33 showing continuous movements in time sequence during a predetermined time period, which are corresponding to setting data 225A1 to 225A3 shown in Fig. 25, respectively.

In other words, the sound data B21 of Fig. 27 corresponds to setting data 225A1, or 'left punch'. The sound data B22 corresponds to setting data 225A2, or 'preparation'. The sound data B23 corresponds to setting data 225A3, or 'energy emission' in Fig. 27. These are the same in case of Fig. 28.

The monitor 260V displays image data of linking movement among image data B21 to B23 in order that display of the movement of character B is natural. In this case, the monitor 260V prepares a plurality of image data, each and every of which is a little bit different from that just previously displayed, and uses each of these for every frame. In other words, image data B21 to B23 are some of key image data out of a plurality of continuous image data.

Because the user A performs the next movement while observing image of monitor 260V which seems to be analogue in appearance, the user may easily predict the next movement and perform continuous movement smoothly. Therefore, according to the present embodiment, the interest as a game software and the completion degree as a software supporting fitness exercise is high.

In the example of Fig. 27, it is displayed that the character B moves the right hand from a position near the waist to a position in front of the chest, and draws the left hand from a position of throwing, while the image data shifts from the state of image data B21 to that of image data B22. In other words, it is displayed that the character B moves the right hand and the left hand at the same time.

Figs. 26 to 28 also show the effect C of the user A's movement displayed on the monitor 260V. Especially, Fig. 26 shows the monitor 260V which displays the effect C1 in case the evaluating unit 245 evaluates good evaluation of which correspondence of the last setting data (kicking right upper portion which is the last movement of the character B) of a setting data group with input of the user A is good. In here, the monitor 260V does not display the effect C in case the evaluating unit 245 evaluates good evaluation about a setting data prior to the last setting data. In other words, the monitor 260V changes display contents according to whether or not the evaluated data is the last setting data even if the evaluating unit 245 provides the same evaluation result.

Fig. 27 shows that the monitor 260V displays the effect C2 even in case the evaluating unit 245 does not provide good evaluation about at least one of the setting data group (left punch - preparation - energy emission of the character B) in relation to correspondence of a continuous setting data group with an input group of the user A.

In other words, because the difference between output timing of a setting data 225A2 (image data B22) and input timing (refer to imaginary display of a dotted line B24) of the user A is larger than a predetermined time value, the evaluating unit 245 does not provide good evaluation for setting data 225A2, and does not provide "all good" evaluation about the continuous setting data group.

On the other side, as shown in Fig. 28, the monitor 260V displays effect C3 (displayed in a more splendid shape than the effect C2) because the evaluating unit 245 evaluates a good evaluation for all of the setting data in relation to correspondence of the setting data group, which is set in the same way as in Fig. 27, with the input group of the user A.

In other words, because the difference between output timing of each of the setting data 225A1 to 225A3 and each of input timing of user A is no more than a predetermined time, and there is correspondence of the identification information 240B with the strength information 240C in relation to all of the setting data 225A1 to 225A3 (image data B21 to B23), the evaluating unit 245 evaluates a good evaluation for all of the setting data 225A1 to 225A3, and evaluates a good evaluation about the continuous setting data group.

Additionally, the evaluating unit 245 outputs sound of middle level volume to the speakers 260R and 260L in case of displaying the effect C2 on the monitor 260V, and outputs sound of high level volume to the speakers 260R and 260L in case of displaying the effect C3 on monitor 260V.

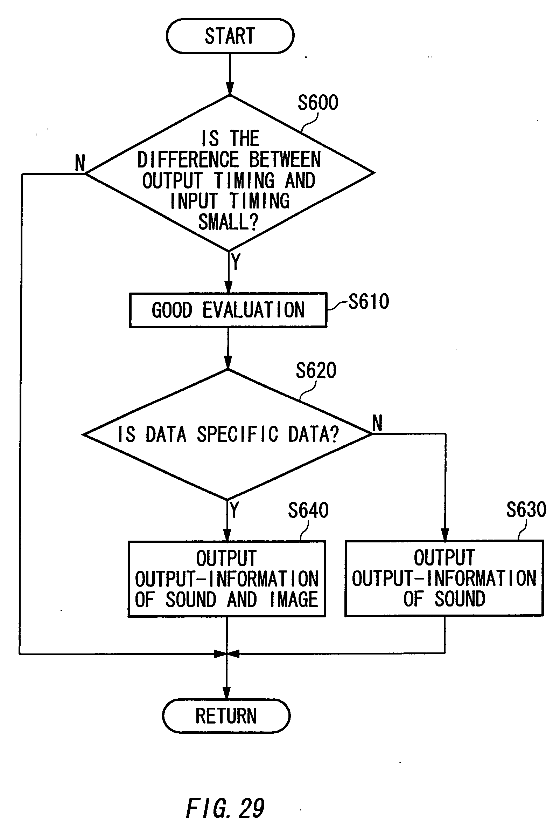

Fig. 29 shows a processing flow of the evaluating unit 245. As shown in Fig. 29, the evaluating unit 245 compares timing information extracted from the output 240A with output timing of setting data 225A (S600) in case there is correspondence of the identification information 240B and the strength information 240C with the setting data 225A, and creates evaluating information as a good evaluation if the comparison result is equal to or less than a predetermined value (S610).

Next, the evaluating unit 245 determines whether or not the setting data 225A is specific data in a group of setting data 225A (S620), outputs output information of only sound to the output unit 260 in case it is not specific data (S630), and outputs output information of sound and image to the output unit 260 in case it is specific data (S640).

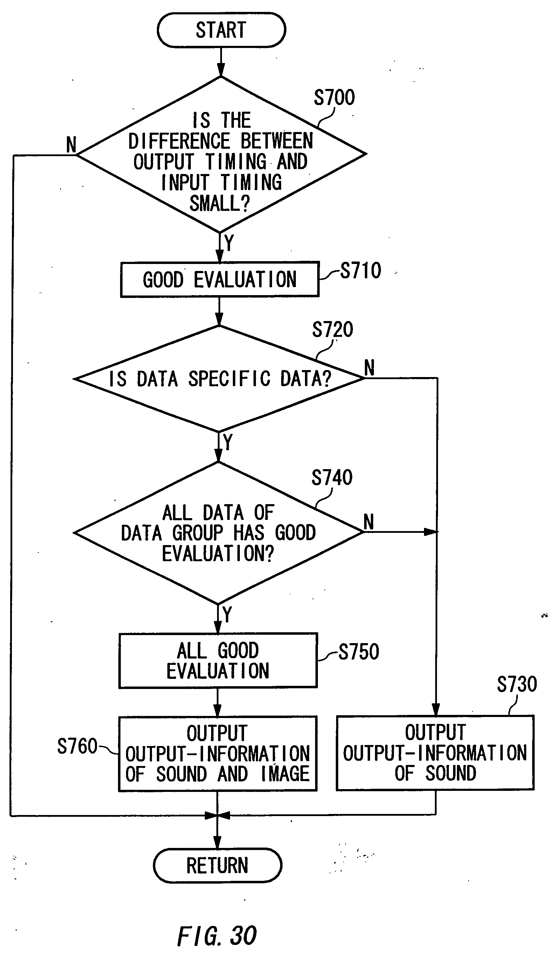

Fig. 30 shows another processing flow of the evaluating unit 245. As described above with reference to Fig. 29, the evaluating unit 245 compares timing information extracted from the output 240A and output timing of setting data 225A (S700), and creates evaluating information of good evaluation in case the comparison result is no more than a predetermined value (S710).

Next, the evaluating unit 245 determines whether or not the setting data 225A is specific data in a setting data group 225A (S720), outputs output information of only sound to the output unit 260 in case that it is not specific data (S730), and determines whether all setting data 225A of the setting data group 225A can acquire good evaluation in case of specific data (S740).

The evaluating unit 245 creates evaluating information of 'all good' evaluation in case it can acquire good evaluation for all of the setting data 225A of the setting data group 225A (S750), and outputs output information of sound and image to the output unit 260 (S760).

In the above cases, the evaluating unit 245 may use the continuously outputted last setting data as the specific data.

The evaluating unit 245 may use strength information 240C for creating evaluating information or output information, although it is described above with reference to Fig. 25 that the evaluating unit 245 uses strength information 240C for identifying movement (a punch or a knife, and so on) of the user A. For example, the evaluating unit 245 may create information that includes even higher volume if strength information 240C indicates even larger strength, even if the evaluating information is the same.

In case the input detecting apparatus 10 has comparison information of the electromotive force [mV] of the acceleration sensor 55 with the small threshold value Vs [mV] and the large threshold value Vb [mV], it may be preferable to transmit the strength information 240C, which includes this comparison information, to the timing evaluation apparatus 20. Furthermore, in case the input detecting apparatus 10 includes two acceleration sensors, or one for normal speed detection and the other for high speed detection, it may be also preferable to transmit the strength information 240C, which includes output of each of these acceleration sensors.

Also, the evaluating unit 245 may perform evaluation based on lasting time of input detecting information from the time of output 240A of the timing detecting unit 240.

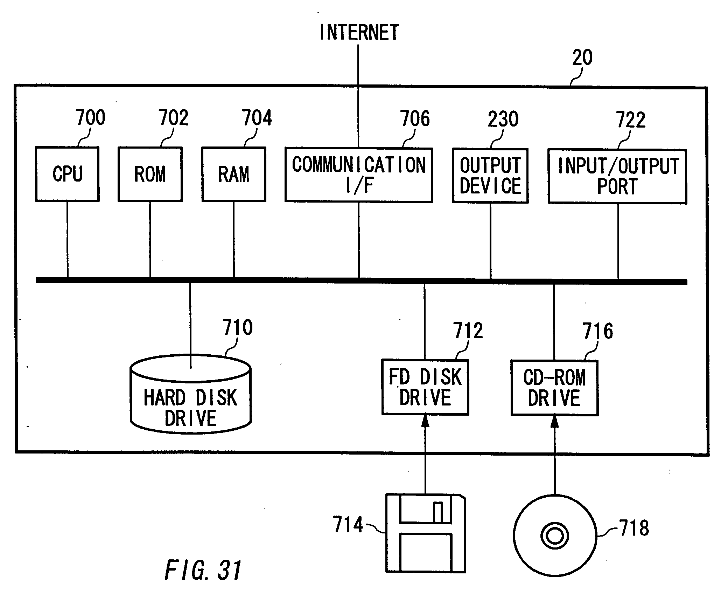

Fig. 31 is a block diagram indicating hardware construction of the timing evaluating apparatus 20. The timing evaluating apparatus 20 includes a CPU 700, a ROM 702, a RAM 704, a communication interface 706 and an input/output port 722. The CPU 700 operates based on a program stored in the ROM 702 and the RAM 704. The communication interface 706 communicates with outside system through a communication network. A hard disk drive 710, as an example of storing apparatus, stores setting information and a program which the CPU 700 operates. Also, according to the present embodiment, the hard disk drive 710, also as a history database, stores information about the difference between the reference time and timing. The input/output port 722 transmits and/or receives data with the input detecting apparatus 10.

A flexible disk drive 712 reads data or program from a flexible disk 714, and provides it to the CPU 700. A CD-ROM drive 716 reads data or program from a CD-ROM 718, and provides it to the CPU 700. The communication interface 706 is connected to the Internet and transmits and/or receives data.

The software which the CPU 700 operates is stored in the recording medium such as flexible disk 714 or CD-ROM 718, and so on, and is provided to a user. The software stored in the recording medium may be compressed or uncompressed. The software is installed from the recording medium to the hard disk drive 710, and is read out to the RAM 704, and is operated by the CPU 700.

A software stored in the recording medium and provided, or a software installed on the hard disk drive includes a mode setting module, a reference time setting module, a data setting module, a tempo measuring module, an evaluating time period module, a timing detecting module, an evaluating module, an evaluation result outputting module, a history storing module, and a mode determining module as functional elements. The corresponding software is an example of evaluating program according to the present embodiment. Processing performed by the CPU700 of a computer system activated by each module included in the software is identical to function and operation of each of corresponding members of the timing evaluating apparatus 20 according to the present embodiment. Accordingly, details of the modules are not discussed any further.

A part or total operation of the timing evaluating apparatus 20 according to all embodiments illustrated in the present application can be stored in the flexible disk 718 or the CD-ROM 718 as examples of recording medium, as shown in Fig. 31.

Even if these computer programs are directly retrieved in RAM from recording medium and are executed, the computer programs may be retrieved in RAM after it is installed in hard disk drive and may be executed thereafter. Further, the computer program can be stored in one or more recording medium. Each module stored in recording medium may provide each function together with operating system. For example, it may request the operating system to perform a portion or the whole of the functions and provide functions, based on the response from the operating system.

As recording medium, in addition to flexible disk and CD-ROM, optical recording medium such as DVD, magnetic recording medium such as MD, magneto-optical recording medium such as PD, tape medium, magnetic recording medium, semiconductor memory such as IC card and miniature card can be used. These recording media are examples of the recording medium relating to the present embodiment. Further, the computer program may be provided to the timing evaluating apparatus 20 through communication network, if storing device such as hard disk or RAM provided in a server system which is connected to dedicated communication network or the Internet.

According to another embodiment, a computer evaluating program for evaluating input timing of a user includes a mode setting module for selecting one mode from a plurality of modes, an evaluating time period setting module for setting evaluating time period according to the mode selected by the mode setting module, an input detecting module (corresponding to the timing detecting unit 240) for detecting input timing of the user, an evaluating module for creating different evaluating information according to cases where the timing detected by the input detecting module is included in the time period and where the timing is not included in the time period.

The input detecting module may detect movement of a user's body as input of the user. The input detecting module may detect information about acceleration created by movement of body as input of the user.

The evaluating time period setting module, which includes a reference time setting module for setting a reference time indicating timing that a user has to provide input, may set a time period to include a time earlier than the reference time. It may further include a movement output module (corresponding to the data setting unit 225) for outputting movement information as at least one of sound and image indicating movement which a user has to perform at the reference time set by the reference time setting module.

The input detecting module detects input timing received from a plurality of external devices, and the input timing corresponds to the external devices from which input is received. The evaluating time period setting module may set different time period on each of the plurality of external devices. The mode setting module selects a predetermined mode out of at least three (3) modes. The evaluating time period setting module may set only one time period to include a time earlier than the reference time, wherein the only time period set is selected out of zero (0) mS, a time period included in the range of 20 mS to 60 mS and a time period included in the range of 100 mS to 200 mS.

The mode setting module selects a predetermined mode out of a plurality of modes including a normal mode and another mode (intermediate mode or veteran mode) for experienced users. The evaluating time period setting module may set a faster time period in case the mode setting module selects the mode for experienced users than that in case the mode setting module selects the normal mode.

The evaluating time period setting module further includes a history storing module for storing information about the difference between the reference time set by the reference time setting module and timing detected by the input detecting module. The evaluating time period setting module may set a time period by using information about the difference which the history storing module stores. There may be further included a mode determining module for determining mode to which a user corresponds by using the history storing module for storing information about the difference between reference time set by the reference time setting module and the timing detected by the input detecting module and information about the difference stored by the history storing module.

There may be further included a user handling output module (corresponding to the evaluation result output unit 250) for outputting at least one of image and sound corresponding to input of the user, and a output timing control module (included in the evaluation result output unit 250) for controlling timing on which the user handling output module outputs at least one of image and sound according to timing detected by the input detecting module and the mode chosen by the mode setting module. The output timing control module may output image to the user handling output module on a timing delayed by a predetermined interval from the timing detected by the input detecting module.

The movement output module outputs movement information as sound, and may include the user handling output module for outputting image corresponding to input of a user, a output timing control module for controlling timing on which the user handling output module outputs at least one of image and sound according to the timing detected by the input detecting module and the mode chosen by the mode setting module, and a image displaying module (included in the data setting unit 225) for displaying image outputted by the user handling output module and image outputted by the user handling output module on a same screen.

In a timing evaluating system including an input detecting apparatus for detecting input of a user and a timing evaluating apparatus for evaluating timing, the input detecting apparatus includes a detecting unit for detecting input of the user, and a transmitting unit for transmitting input information detected by the detecting unit to the timing evaluating apparatus, and the timing evaluating apparatus includes a mode setting unit for selecting one (1) mode out of a plurality of modes, an evaluating time period setting unit for setting time period for evaluating timing according to the mode selected by the mode setting unit, a receiving unit for receiving input information by the input detecting apparatus, an input detecting unit for detecting input timing of the user using input information received by the receiving unit, and an evaluating unit for providing different evaluating information according to cases where the timing detected by the input detecting unit is included in the time period set by the evaluating time period setting unit and where the detected timing is not included in the set time period.

The detecting unit may be able to be mounted on a user's body. The detecting unit may detect movement of body as input of the user. The input detecting apparatus may include a plurality of detecting units. The evaluating time period setting unit may set different time period on each of the plurality of detecting units. Mounting on different parts of body, the plurality of detecting units may detect movement of parts, respectively.

The timing evaluation apparatus for evaluating input timing of the user includes a mode setting unit for selecting one (1) mode from a plurality of modes, an evaluating time period setting unit for setting time period for evaluating timing according to the mode selected by the mode setting unit, an input detecting unit for detecting input timing of the user, and an evaluating unit for providing different evaluating information according to cases where timing detected by the input detecting unit is included in the time period and where the detected timing is not included in the time period.

In a recording medium storing a computer program for evaluating input timing of a user, the program includes a mode setting module for selecting one (1) mode out of a plurality of modes, an evaluating time period setting module for setting a time period for evaluating timing according to the mode selected by the mode setting module, an input detecting module for detecting input timing of the user, and an evaluating module for providing different evaluating information according to cases where timing detected by the input detecting unit is included in the time period and where the detected timing is not included in the time period.

An evaluating program for evaluating input timing of a user includes an sound output module (included in the data setting unit 225) for outputting sound, an evaluating time period setting module for setting a time period for evaluating timing according to the speed of sound outputted by the sound output module, an input detecting module for detecting input timing of the user, and an evaluating module for providing different evaluating information according to cases where timing detected by the input detecting unit is included in the time period and where the detected timing is not included in the time period.

The sound output module may output a song as sound, and the evaluating time period setting module may set time width corresponding to the song outputted by the sound output module by using a database storing time width designating information, which designates different time width according to the song.

There may be further included a tempo measuring module for measuring speed of sound at every predetermined time. The evaluating time period setting module may set a time period by changing time width according to speed measured by the tempo measuring module. The tempo measuring module may measure the number of output of predetermined specific sound for a predetermined time as speed.

The evaluating time period setting module may set broader width of a time period in case the sound output module outputs sound in a predetermined tempo than that in case the sound output module outputs sound faster than the predetermined tempo. The evaluating time period setting module may set time width for a plurality of time periods not to overlap in case of setting a plurality of time periods in a series of sound.

A timing evaluating apparatus for evaluating input timing of a user includes an sound output unit for outputting sound, an evaluating time period setting unit for setting time period for evaluating timing according to speed of sound outputted by the sound output unit, an input detecting unit for detecting input timing of the user, and an evaluating unit for providing different evaluating information according to cases where timing detected by the input detecting unit is included in the time period and where the detected timing is not included in the time period.

In a recording medium storing a computer program for evaluating input timing of a user, the program includes an sound output module for outputting sound, an evaluating time period setting module for setting time period for evaluating timing according to speed of sound outputted by the sound output module, an input detecting module for detecting input timing of the user, and an evaluating module for providing different evaluating information according to cases where timing detected by the input detecting unit is included in the time period and where the detected timing is not included in the time period.

A game system, for controlling game in response to movement of a human body according to image data or sound data outputted, determines a correspondence of a group of continuous data of image or sound outputted at a predetermined time with movement signal from a part of body which moves according to the group of continuous data, and changes output of image or sound based on the evaluation result.

According to another embodiment of the present invention, there is provided a game system that determines at least one out of time difference between output of a group of continuous data and reception of a movement signal, existence of a movement signal and strength of movement related to the movement signal, and changes output of image or sound according to the determining result.

According to another embodiment of the present invention, there is provided a game system that determines whether or not image or sound data outputted is a group of continuous data, determines correspondence of an individual data constituting the group of continuous data with a movement signal corresponding to the individual data, and changes output of image or sound at an output time of the final individual data of the group of continuous data according to the evaluation result.

According to another embodiment of the present invention, there is provided a game system that determines whether image data or sound data outputted is a group of continuous data, determines correspondence of the final individual data of the group of continuous data with a movement signal corresponding to the final individual data, and changes output of image or sound at an output time of the final individual data of the group of continuous data according to the evaluation result.

According to another embodiment of the present invention, there is provided a game system that determines correspondence of an individual data constituting a group of continuous data with a movement signal corresponding to the individual data when the correspondence of a group of continuous data with a movement signal is determined, and changes output of image or sound in output time of each of individual data according to the evaluation result.

According to another embodiment of the present invention, there is provided a game system that outputs a consumed calorie value according to progress of the game, based on a game program for outputting image or sound data.

According to another embodiment of the present invention, there is provided a game system for controlling a game by moving a part of body according to image data or sound data outputted. The game system includes a main transmitter-receiver that receives a movement signal from a transmitter mounted on a part of body, and transmits the received movement signal to a game apparatus, and a sub transmitter-receiver that receives a movement signal and transmits the received movement signal to the main transmitter-receiver. The game system determines correspondence of image data or sound data with the movement signal, and changes output of image or sound according to the determining result.

According to another embodiment of the present invention, there is provided a game apparatus that includes an output means (corresponding to the output unit 260) for outputting image or sound data, a movement signal receiving means (corresponding to the input detecting apparatus 10) for receiving a movement signal from a part of body, a determining means for determining correspondence of a group of continuous image or sound data, which is outputted for a predetermined period, with the movement signal of the part of body which moves according to the group of continuous data, wherein the output means changes and outputs an output of image or sound according to the determining result.

According to another embodiment of the present invention, the determining means determines at least one out of time difference between output of the group of continuous data and reception of the movement signal, existence of a movement signal and strength of movement corresponding to the movement signal. The output means changes output of image or sound according to the determining result.

According to another embodiment of the present invention, there is provided a game apparatus, which further includes a continuous data determining means (included in the evaluating unit 245) for determining whether or not the outputted image or sound data is a group of continuous data. The determining means determines correspondence of an individual data constituting the group of continuous data with the movement signal corresponding to the individual data in case output image or sound data is a group of continuous data. The output means changes output of image or sound at an output time of the final individual data of the group of continuous data according to the evaluation result.

According to another embodiment of the present invention, there is provided a game apparatus, which further includes a continuous data determining means for determining whether or not outputted image or sound data is a group of continuous data. The determining means determines correspondence of a final individual data of the group of continuous data with the movement signal corresponding to the final individual data, and the output means changes output of image or sound at an output time of the final individual data of the group of continuous data according to the evaluation result.

According to another embodiment of the present invention, the determining means determines correspondence of an individual data of the group of continuous data with the movement signal corresponding to the individual data when correspondence of the group of continuous data with the movement signal is determined, and the output means changes output of image or sound at an output time of each of the individual data according to the evaluation result.

According to another embodiment of the present invention, there is provided a game program which includes an output step for outputting image data or sound data, a movement signal receiving step for receiving a movement signal from a part of body, a determining step for determining correspondence of a group of continuous image or sound data, which is outputted for a predetermined period, with the movement signal of the part of body which moves according to the group of continuous data, wherein the output step changes and outputs an output of image or sound according to the determining result.

According to another embodiment of the present invention, the determining step determines at least one out of time difference between output of a group of continuous data and reception of a movement signal, existence of the movement signal and strength of movement corresponding to the movement signal, and the output step changes output of image or sound according to the determining result.

According to another embodiment of the present invention, there is provided a game program, which further includes a continuous data determining step for determining whether outputted image or sound data is a group of continuous data, wherein the determining step determines correspondence of an individual data constituting the group of continuous data with the movement signal corresponding to the individual data in case the outputted image or sound data is a group of continuous data, and the output step changes output of image or sound at an output time of a final individual data of the group of continuous data according to the evaluation result.

According to another embodiment of the present invention, there is provided a game program, which further includes a continuous data determining step for determining whether outputted image or sound data is a group of continuous data, wherein the determining step determines correspondence of a final individual data of the group of continuous data with the movement signal corresponding to the final individual data, and the output step changes output of image or sound at an output time of the final individual data of the group of continuous data according to the evaluation result.

According to another embodiment of the present invention, the determining step determines correspondence of an individual data of a group of continuous data with a movement signal corresponding to the individual data when the correspondence of the group of continuous data with the movement signal is determined, and the output step changes output of image or sound at an output time of each of individual data according to the evaluation result.

Although the present invention has been described by way of exemplary embodiments, it should be understood that those skilled in the art might make many changes and substitutions without departing from the spirit and the scope of the present invention which is defined only by the appended claims.

## Claims

1. A computer program for evaluating input timing of a user comprising:
an output module (260) for continuously outputting sound or image to said user;
a timing detecting module (240) for detecting input timing of said user according to said sound or image;
an evaluating time period setting module (235) for setting up a changeable time period according to output timing of said sound or image; and
an evaluating module (245) for comparing said time period with said input timing and providing evaluating information according to a result of said comparison.

2. A computer program according to claim 1, further comprising a mode setting module (215) for selecting one mode out of a plurality of modes,
wherein said evaluating period time setting module changes said time period according to said mode.

3. A computer program according to any of claims 1 to 2, further comprising:
a reference time setting module (220) for setting up a reference time which indicates timing on which said user has to provide said input according to said output timing of said sound or image,
wherein said evaluating time period setting module (235) sets up said time period to include a time earlier than said reference time.

4. A computer program according to any of claims 1 to 3, wherein said timing detecting module (240) detects said input timing transmitted from a plurality of external devices and identifying information which identifies each of said plurality of external devices,
said evaluating time period setting module (235) can set said time period on each of said a plurality of external devices, and
said evaluating module (245) provides said evaluating information based on said input timing received from each of said plurality of external devices, said identifying information and said time period set on each of said plurality of external devices.

5. A computer program according to any of claims 2 to 4, wherein said mode setting module (215), selects a predetermined mode out of a plurality of modes comprising a normal mode and a veteran mode, said veteran mode being designed for a veteran-level user, and,
in case said veteran mode is selected, said evaluating time setting module (235) sets shorter time period than said time period set in case said normal mode is selected.

6. A computer program according to any of claims 1 to 5, further comprising:
a history storing module (265) for storing a history of said evaluating information,
wherein said evaluating time period setting module (235) changes said time period using said history of said evaluating information.

7. A computer program according to any of claims 2 to 6, further comprising:
an evaluation result output module (250) for providing output information comprising sound or image information according to said evaluating information, and outputting said output information according to said input timing and said mode,
wherein said output module (260) outputs said sound or image according to said output information.

8. A computer program according to any of claims 2 to 7, wherein said output module (260) outputs said sound or image on timing changed from said input timing by a delaying interval set according to said mode.

9. A computer program according to any of the preceding claims, wherein said evaluating time period setting module (235) can change said time period according to output tempo of said sound.

10. A computer program according to any of the preceding claims, wherein said evaluating time period setting module (235) sets width of said time period in case said sound is outputted on a slower tempo to be broader than that of said time period in case said voices are outputted on a faster tempo.

11. A computer program according to any of the preceding claims, wherein, when a plurality of time period are set in a series of sound, said evaluating time period setting module (235) sets said plurality of time period not to overlap with one another.

12. A computer program for evaluating input timing of a user comprising:
a data setting module (225) for setting a setting data group comprising a plurality of sound or image data, and outputting each of setting data of said setting data group on a predetermined output timing;
an output module (260) for continuously outputting sound or image based on said setting data group to said user;
a timing detecting module (240) for detecting input timing of said user according to said setting data group; and
an evaluating module (245) for providing evaluating information according to a result of comparing output timing group, which comprises said plurality of output timing, with a input timing group, which comprises said plurality of input timing corresponding to said data group, and outputting output information according to said evaluating information,
wherein said output module changes said sound or image based on said output information.

13. A computer program as claimed in claim 12, wherein said data setting module (225) further outputs identifying information which identifies each of setting data of said setting data group, and
said evaluating module (245) selects one output information from said plurality of output information based on said identifying information and said evaluating information.

14. A computer program according to any of claims 12 to 13, wherein said evaluating module (245) selects one evaluating information from said evaluating information group based on said identifying information and a result of said comparison.

15. A recording medium for storing computer program for evaluating input timing of a user comprising:
an output module (260) for continuously outputting sound or image to said user;
a timing detecting module (240) for detecting input timing of said user according to said sound or image;
an evaluating time period setting module (235) for setting up a changeable time period according to output timing of said sound or image outputted continuously; and
an evaluating module (245) for comparing said time period with said input timing, and providing evaluating information according to a result of said comparison.

16. A recording medium for storing computer program for evaluating input timing of a user comprising:
a data setting module (225) for a setting data group from a plurality of sound or image data and outputting each of setting data of said setting data group on said output timing;
an output module (260) for continuously outputting sound or image based on said setting data group to said user;
a detecting module (240) for detecting input timing of said user according to said setting data group; and
an evaluating module (245) for comparing an output timing group, which comprises said plurality of output timing, with an input timing group, which comprises said plurality of input timing corresponding to said setting data group, providing evaluation information according to a result of said comparison, and outputting output information according to said evaluating information.

17. A timing evaluating apparatus for evaluating input timing of a user comprising:
an output unit (260) for continuously outputting sound or image to said user;
a timing detecting unit (240) for detecting input timing of said user according to said sound or image;
an evaluating time period setting unit (235) for setting up a changeable time period according to output timing of said sound or image outputted continuously; and
an evaluating unit (245) for comparing said time period with said input timing, and providing evaluating information according to a result of said comparison.

18. A timing evaluating apparatus comprising:
a data setting unit (225) for setting a setting data group from a plurality of sound or image data, and outputting each of setting data of said setting data group on predetermined output timing;
an output unit (260) for continuously outputting sound or image to said user based on said setting data group;
a detecting unit (240) for detecting input timing of said user according to said setting data group; and
an evaluating unit (245) for comparing an output timing group, which comprises said plurality of output timing, with an input timing group, which comprises said plurality of input timing corresponding to said setting data group, providing evaluation information according to a result of said comparison, and outputting output information according to said evaluating information,
wherein said output unit changes said sound or image based on said output information.

19. A timing evaluating system comprising:
an input detecting apparatus (10) for detecting input of a user; and
a timing evaluating apparatus (20) for evaluating input timing of said user,
wherein said input detecting apparatus detects input of said user, and transmits information about said input to said timing evaluating apparatus, and
said timing evaluating apparatus comprises;
an output unit (260) for continuously outputting sound or image to said user;
a timing detecting unit (240) for detecting input timing of said user according to said sound or image, using said input information transmitted from said input detecting apparatus;
an evaluating time period setting unit (235) for setting up a changeable time period according to output timing of said sound or image outputted continuously; and
an evaluating unit (245) for comparing said time period with said input timing, and providing evaluating information according to a result of said comparison.

20. A timing evaluating system comprising:
an input detecting apparatus (10) for detecting input of a user; and
a timing evaluating apparatus (20) for evaluating input timing of said user,
wherein said input detecting apparatus detects input of said user, and transmits information about said input to said timing evaluating apparatus, and
said timing evaluating apparatus comprises;
a data setting unit (225) for setting a setting data group from said plurality of sound or image data, and outputting each of setting data of said setting data group on said output timing;
an output unit (260) for continuously outputting sound or image to said user based on said setting data group;
a timing detecting unit (240) for detecting input timing of said user according to said setting data group using information about said input received from said input detecting unit; and
an evaluating unit (245) for comparing an output timing group, which comprises said plurality of output timing, with an input timing group, which comprises said plurality of input timing corresponding to said setting data group, providing evaluation information according to a result of said comparison, and outputting output information according to said evaluating information,
wherein said output unit changes said sound or image based on said output information.

21. A computer program for evaluating input timing of a user comprising;
a mode setting module (215) for selecting one mode from a plurality of modes;
an evaluating time period setting module (235) for setting an evaluating time period according to said mode chosen by said mode setting module;
an input detecting module (10) for detecting input timing of said user; and
an evaluating module (245) for providing evaluating information indicating different evaluation result in case said timing detected by said input detecting module is included in said time period from in case said timing is not included in said time period.

22. A computer program for evaluating input timing of a user comprising:
an sound output module for outputting sound;
an evaluating time period setting module (235) for setting evaluating time periods to have different time width according to speed of said sound outputted by said sound output module;
an input detecting module (10) for detecting input timing of said user; and
an evaluating module (245) for providing evaluating information indicating different evaluation result in case said timing detected by said input detecting module is included in said time period from in case said timing is not included in said time period.

23. A computer program for evaluating input timing of a user comprising:
an output module (260) for outputting sound data or image data;
a receiving module for receiving movement signal from a part of a body of a user; and
a determining module for determining correspondence of a continuous data group of said image or sound data outputted for a predetermined period with said movement signal from said part of body, said body moving according to said continuous data group,
wherein said output module changes and outputs sound or image based on a result of said determination.
